# EUROPEAN PATENT SPECIFICATION

(11) **EP 0 497 624 B1**
(45) Date of publication and mention of the grant of the patent: **25.09.1996**
(21) Application number: 92300864.3
(22) Date of filing: 31.01.1992
(51) Int. Cl.: G11B 23/087, G11B 15/61, G11B 15/18, G11B 23/04

(54) **Tape cassette**
Bandkassette
Cassette à bande

(30) Priority: 01.02.1991 JP 31362/91
(43) Date of publication of application: 05.08.1992
(73) Proprietor: SONY CORPORATION, Tokyo 141 (JP)
(72) Inventor: Tanaka, Masato, Shinagawa-ku Tokyo 141 (JP); Yanaka, Kiyotaka, Shinagawa-ku Tokyo 141 (JP)
(74) Representative: Purvis, William Michael Cameron

(56) References cited:
- EP-A- 0 228 600
- EP-A- 0 411 622
- EP-A- 0 431 914
- EP-A- 0 490 610
- US-A- 3 259 331
- US-A- 4 029 268
- PROCEEDINGS OF THE INSTITUTE OF ELECTRICAL ENGINEERS vol. 16, B, no. 14, 19 March 1956, NEW YORK, NY, USA pages 219 - 220 BURT AND ANDREWS 'A new magnetic recording system'
- PATENT ABSTRACTS OF JAPAN vol. 009, no. 190 (P-378)7 August 1985 & JP-A-60 057 586
- PATENT ABSTRACTS OF JAPAN vol. 6, no. 252 (P-161)(1130) 10 December 1982 & JP-A-57 147 172

## Description

The invention relates to a tape cassette provided with spools and a locking member to lock the spools to restrain the spools from undesired rotation while the tape cassette is not in use.

Various tape cassettes for example used for high-density recording of video signals or PCM signals, such as 12.7 mm (half inch) video tape cassettes and 8 mm video tape cassettes, have been provided with a locking mechanism to lock the spools to prevent the magnetic tape from unwinding while the tape cassettes are not in use.

The locking mechanism locks the spools by pressing a locking member against the spools by the resilience of a spring while the tape cassette is not in use, and unlocks the spools by separating the locking member from the spools by means of an unlocking pin inserted into the tape cassette case from outside.

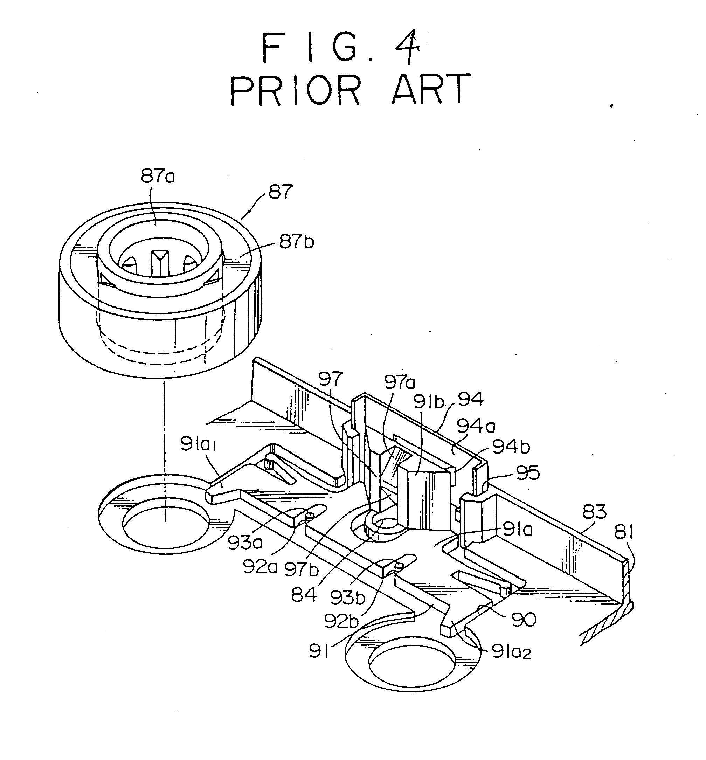

A conventional spool locking mechanism is described by way of example with reference to Figures 4, 5 and 6 of the accompanying drawings. Figures 4 to 6 show that a case body of a tape cassette 81 comprises an upper case half 82 and a lower case half 83. Holes 84 are formed in the upper case half 82 and the lower case half 83 and a locking member 91 is provided in the lower case half 83. An unlocking pin 99 engages the locking member 91 when inserted through the hole 84 in the case body of the tape cassette 81 and shifts the locking member 91.

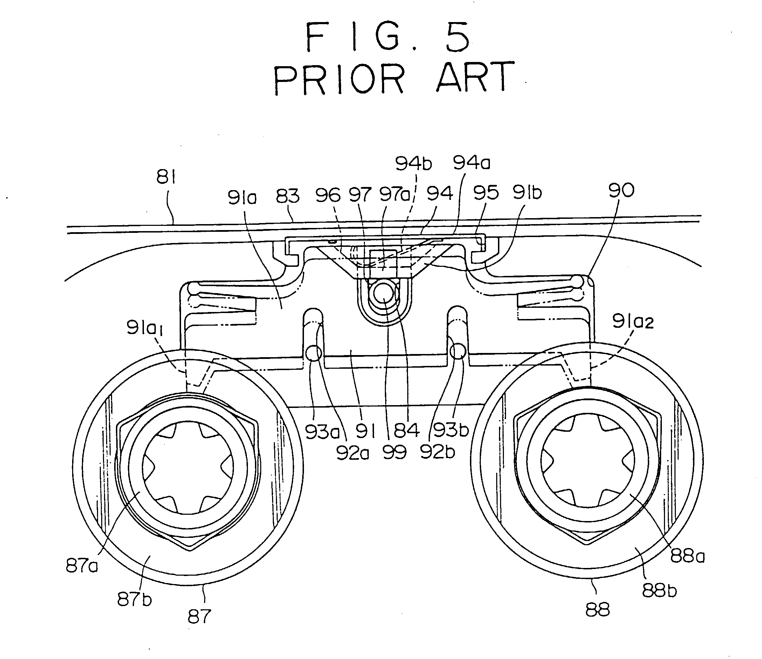

In the following description, a side of the case body of the tape cassette 81 nearer to a recording/reproducing head will be referred to as "the front", and a side of the case body farther from the recording/reproducing head will be referred to as "the rear". As best illustrated in Figure 4 and 5, a substantially rectangular recess 90 is formed in the bottom wall of the lower case half 83 of the case body of the tape cassette 81 in the middle portion of the bottom wall and near the rear side of the case body of the tape cassette 81, and the locking member 91 is provided in the recess 90 and can be moved toward and away from the front, namely, toward and away from the spools 87 and 88.

The locking member 91 has a flat body 91a seated on the bottom surface of the recess 90, and a vertical projection 91b standing upright from the rear portion of the flat body 91a. The flat body 91a is provided with a pair of fingers 91a₁ and 91a₂ projecting from the opposite ends of the front side thereof so as to correspond to the spools 87 and 88, respectively.

Each spool 87, 88 has an inner spool 87a, 88a which receives a spool driving shaft therethrough, and an outer spool 87b, 88b engaged on the inner spool 87a, 88a for axial movement relative to the inner spool 87a, 88a and restrained from turning relative to the inner spool 87a, 88a. The fingers 91a₁ and 91a₂ of the locking member 91 can be pressed against portions of the circumferences of the inner spools 87a and 88a projecting from the lower surfaces of the outer spools 87b and 88b, respectively.

A pair of guide slots 92a and 92b are formed in the front side of the middle portion of the flat body 91a, and guide pins 93a and 93b project from the bottom surface of the recess 90 at positions respectively corresponding to the guide slots 92a and 92b. The guide pins 93a and 93b are received respectively in the guide slots 92a and 92b to guide the locking member 91 for movement in limited directions.

A flat spring 94 for biasing the locking member 91 is disposed behind the locking member 91. The flat spring 94 has a main body 94a, and an arm 94b formed by raising a middle portion of the main body 94a. The main body 94a is fitted in a spring pocket 95 formed on the inner surface of the back wall of the lower case half 83, and the extremity of the arm 94b is received in a recess 96 formed in the back surface of the vertical projection 91b to bias the locking member 91 continuously toward the front side of the tape cassette, namely, in a direction to press the fingers 91a₁ and 91a₂ against the circumferences of the inner spools 87a and 88a.

The locking member 91 is provided in the middle portion of the front surface of its vertical projection 91b with a triangular protrusion 97 to disengage the locking member 91 from the inner spools 87a and 88a. The triangular protrusion 97 has inclined surfaces 97a and 97b symmetrically descending in opposite directions, respectively, from the apex thereof. The unlocking pin 99 received through the hole 84 of either the upper case half 82 or the lower case half 83 into the case body engages the inclined surface 97a or 97b of the triangular protrusion 97 to unlock the spools 87 and 88 by shifting the locking member 91 toward the rear side of the tape cassette.

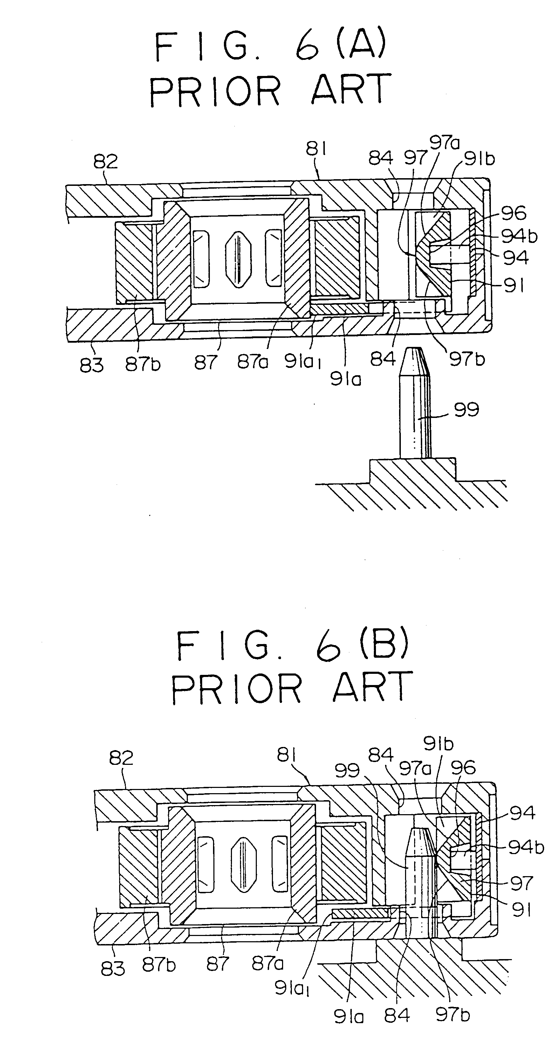

While the tape cassette 81 is not loaded on a recording/reproducing apparatus, the fingers 91a₁ and 91a₂ are pressed against the circumferences of the inner spools 87a and 88a by the resilience of the flat spring 94 as shown in Figure 6(A) and as indicated by alternate long and short dash lines in Figure 5 to lock the spools 87 and 88, so that the spools 87 and 88 are unable to turn even if shock forces are applied to the tape cassette 81. When the tape cassette 81 is loaded onto recording/reproducing apparatus, the unlocking pin 99 of the recording/reproducing apparatus enters the tape cassette 81 through the hole 84 as shown in Figure 6(B) and shifts the locking member 91 toward the rear of the tape cassette 81 to a position indicated by continuous lines in Figure 5 to unlock the spools 87 and 88 by separating the fingers 91a₁ and 91a₂ from the inner spools 87a and 88a.

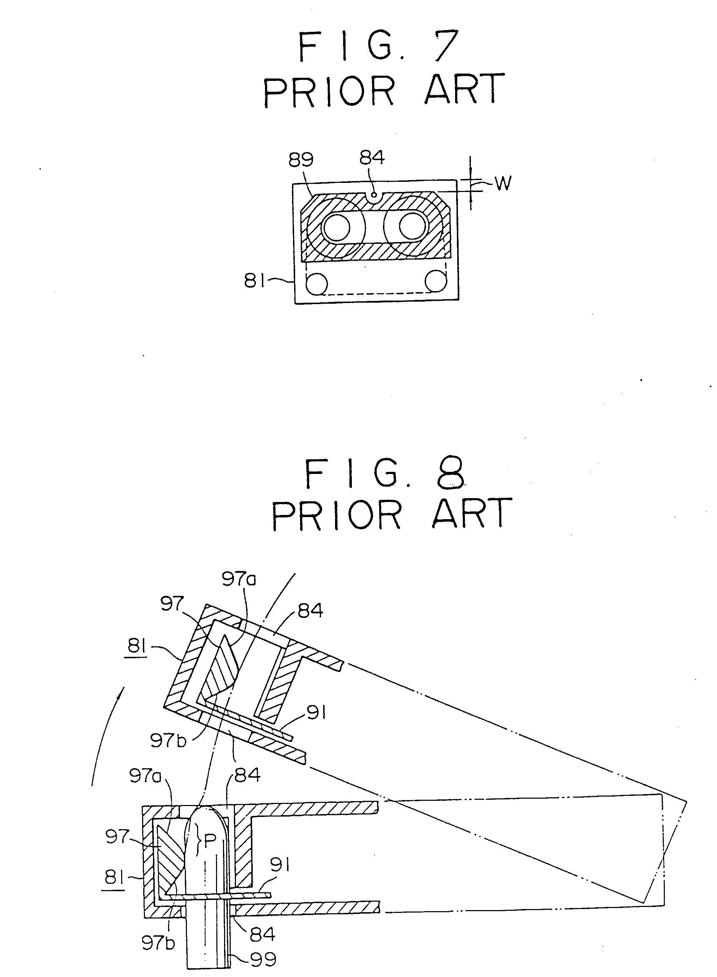

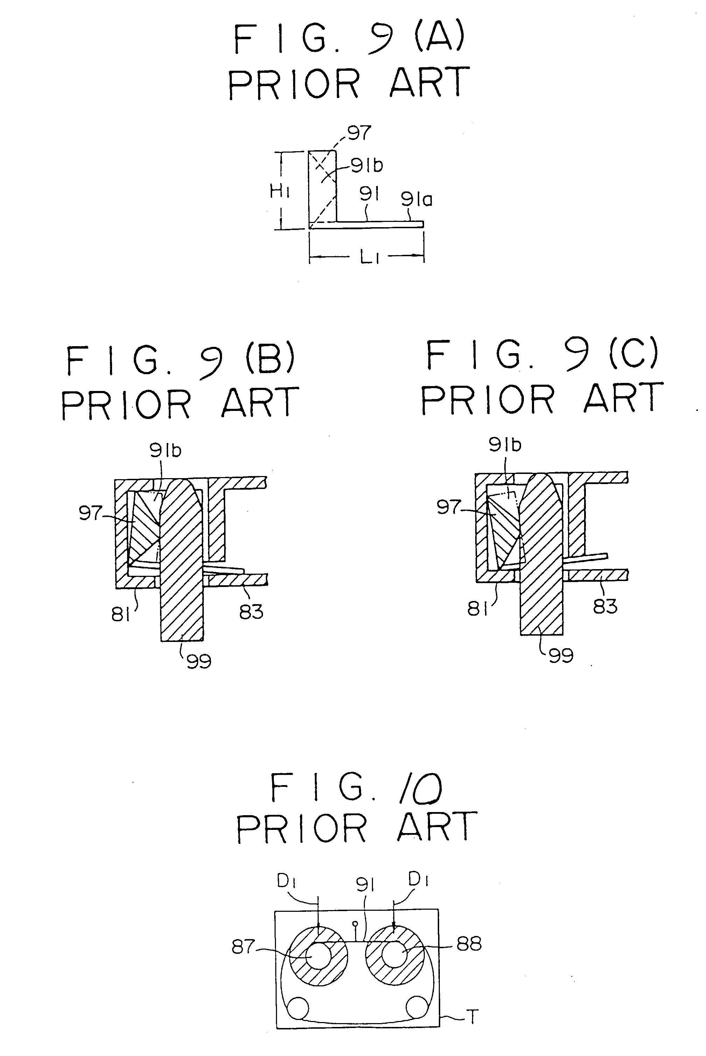

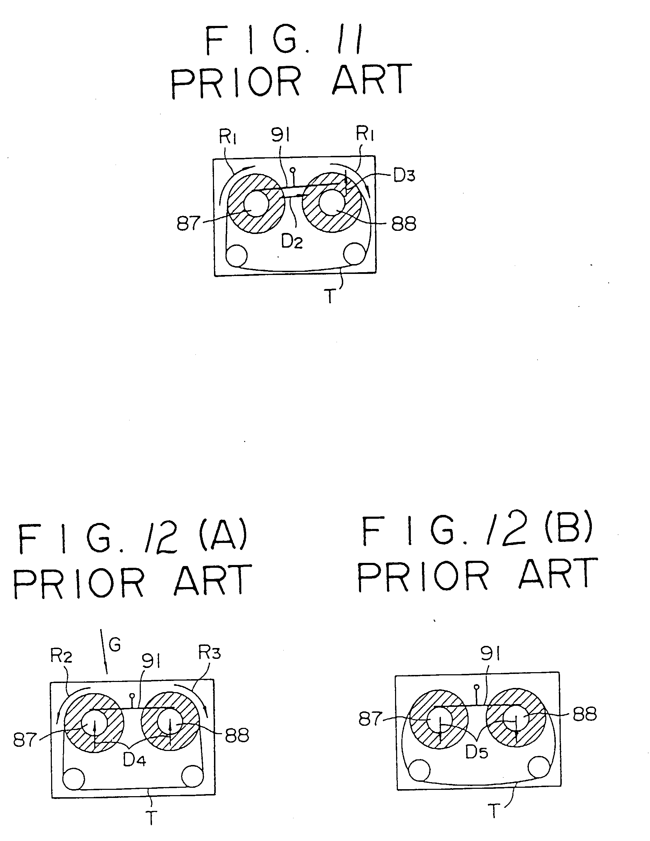

This conventional locking mechanism has the following problems, which will be described hereinafter with reference to Figures 7 to 12.
(1) Since the locking member 91 must be shifted by a distance toward the rear of the tape cassette 81 by means of the unlocking pin 99 received into the tape cassette 81 through the hole 84 of either the upper case half 82 or the lower case half 83 and engaging the triangular protrusion 97 of the locking member 91 to unlock the spools 87 and 88, the holes 84 must be located outside an area of width W (Figure 7) corresponding to the distance by which the locking member 91 must be shifted. Consequently, an area in the surface of the tape cassette available for applying a label 89 is reduced and, if the tape cassette is a very small one, it is impossible to form the label 89 of a size sufficient to indicate all the necessary data.
(2) The apex of the triangular protrusion 97, ie the junction of the inclined surfaces 97a and 97b, in contact with the unlocking pin 99, and expected to move along a course indicated by an alternate long and short dash line in Figure 8, is pushed backward away from that course by the unlocking pin 99 in a region indicated P when the rear portion of the tape cassette 81 is lifted up by the cassette holding mechanism of the recording/reproducing apparatus as shown in Figure 8 to enable the unlocking pin 99 to escape through the hole 84 from the tape cassette 81 in ejecting the tape cassette 81 set opposite to the recording/reproducing head of a recording/reproducing apparatus. Consequently, the locking member 91 is moved toward the rear of the tape cassette 81 beyond its normal unlocking position, which produces resistance against the movement of the tape cassette 81 in lifting up the rear portion of the same to enable the locking pin 99 to escape from the tape cassette 81, obstructing smooth tape cassette ejection.
(3) The locking member 91 is liable to be tilted by the frictional engagement of the unlocking pin 99 and the triangular protrusion 97 as shown in Figures 9(B) and 9(C), increasing the friction between the locking member 91 and the lower case half 83, because, with reference to Figure 9(A), it is difficult to form the locking member 91 so that the width L₁ of the flat body 91a is sufficiently large as compared with the height H₁ of the vertical projection 91b, which obstructs smooth spool unlocking operation.
(4) The spools 87 and 88 are biased slightly toward the front of the tape cassette 81, in the direction of arrows D₁ of Figure 10, by the pressure applied thereto by the locking member 91 in locking the spools 87 and 88 by pressing the locking member 91 against the spools 87 and 88 by the resilience of the flat spring 94 after the unlocking pin 99 has left from the tape cassette 81. Consequently, the tape T extending between the spools 87 and 88 is allowed to slacken, nullifying the essential spool locking action of the locking member 91.
(5) It is possible that the spools 87 and 88 can be unlocked if the tape cassette 81 is rattled. For example, if external vibrations cause the spools 87 and 88 to turn in the direction of arrow R₁ as shown in Figure 11, the spool 87 pushes the locking member 91 in the direction of arrow D₂ and the spool 88 pushes the locking member 91 in the direction of arrow D₃, and thereby the spools 87 and 88 are unlocked. Since the spool 88 is urged in the direction of arrow R₁, the tape T is unwound from the spool 88 and slackens.
   Slackening of the tape T due to the rattling of the tape cassette 81 may be obviated by guiding the locking member 91 so that the locking member 91 is translated perfectly. However, when the spools 87 and 88 differ in weight from each other due to the difference between the amount of the tape T wound on the spool 87 and that wound on the spool 88, the lighter one of the spools 87 and 88 can be unlocked when the tape cassette 81 is rattled.
(6) The spools 87 and 88 move instantaneously toward the rear, ie in the direction of arrow D₄ in Figure 12(A) if an impact G is applied to the rear of the tape cassette 81 and, consequently, the spools 87 and 88 are pulled by the tape T and are caused to turn respectively in the directions of arrows R₂ and R₃ so that the tape T is unwound from the spools 87 and 88. Accordingly, the tape T slackens by a length pulled out from the spools 87 and 88 when the spools 87 and 88 are moved in the direction of arrow D₅ to their original positions as shown in Figure 12(B) by the locking member 91 after the impact G has been removed.
(7) The employment of the flat spring 94 in a locking member biasing means as described with reference to Figures 4 and 5 requires the locking member biasing means to be formed with a relatively large construction, which is disadvantageous in application of the locking member biasing means to a very small tape cassette.

Since the arm 94b of the flat spring 94 tending to spring toward the front of the tape cassette 81 must be strained by the locking member 91 in a direction, namely, toward the rear of the tape cassette 81, opposite the direction in which the arm 94b tends to spring in putting the flat spring 94 in the lower case half 83 or in unlocking the spools 87 and 88, the stress induced in the flat spring 94 increases to cause the flat spring 94 to spring up or to tilt, which is highly likely to make normal spool locking action of the locking member 91 impossible.

Attention is directed to our published specification EP-A-0 490 610 which has an earlier priority date than this specification but was not published until after the priority date of this specification.

According to the invention there is provided a tape cassette comprising:
a case body having an opening in a front side thereof at which a tape is exposed to a read/write head, and comprising an upper case half and a lower case half;
a pair of spools on which a tape can be wound, supported for rotation within the case body, and provided respectively with toothed portions;
a locking member slidable on the inner surface of a bottom wall of the lower case half within the case body toward and away from the spools and provided with locking fingers to be brought into engagement respectively with the toothed portions of the spools; and
a spring means acting on the locking member to bias the locking member toward the rear of the case body;
in which the locking member is provided with a cam portion having inclined surfaces sloping in opposite directions with respect to the thickness of the case body,
one or other of the inclined surfaces of the cam portion of the locking member is engaged by a positioning pin of recording/reproducing apparatus when the tape cassette is loaded onto recording/reproducing apparatus,
the locking member is moved against the resilience of the spring means toward the front of the case body by the positioning pin engaging one or other of the inclined surfaces of the cam portion upon loading the tape cassette on recording/reproducing apparatus, so that the locking fingers are disengaged from the toothed portions of the spools to unlock the spools, and
the locking member is moved by the resilience of the spring means toward the rear of the case body as the positioning pin leaves the case body upon unloading of the tape cassette, so that the locking fingers are brought into engagement with the toothed portions of the spools to lock the spools;
wherein the spring means is a spring wire and is strained normally so as to bias the locking member toward the rear of the case body, the spring wire is engaged with the locking member only by a spring holding portion formed at the middle of the forward portion of the locking member and end portions of the spring wire rest on respective steps formed on the lower case half.

The locking member is brought into contact with the circumferences of the spools from the front of the tape cassette to lock the spools, and the locking member is shifted toward the front of the tape cassette when the pin engages the cam portion to unlock the spools.

The locking member presses the pair of spools of the tape cassette from the front of the tape cassette toward the rear of the cassette, namely, in a direction to tighten the tape so that slackening of the tape can be prevented. Since the locking member is moved toward the front of the tape cassette to unlock the spools, any additional space for the movement of the locking member need not be formed in the rear of the tape cassette, and unnecessary friction between the unlocking pin and the triangular cam portion can be obviated in ejecting the tape cassette from the recording/reproducing apparatus.

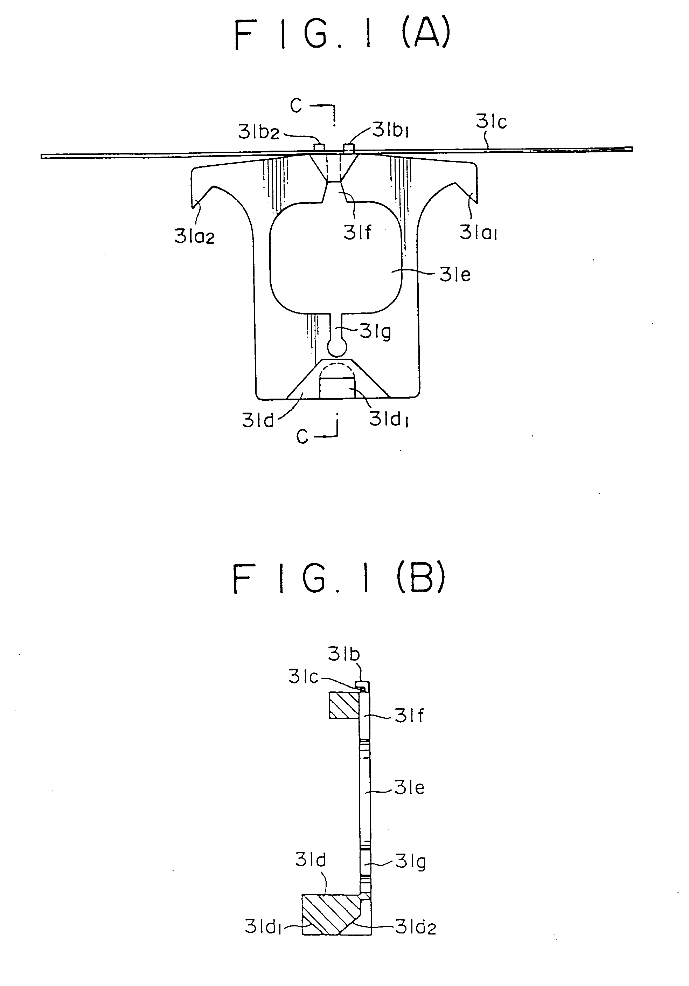

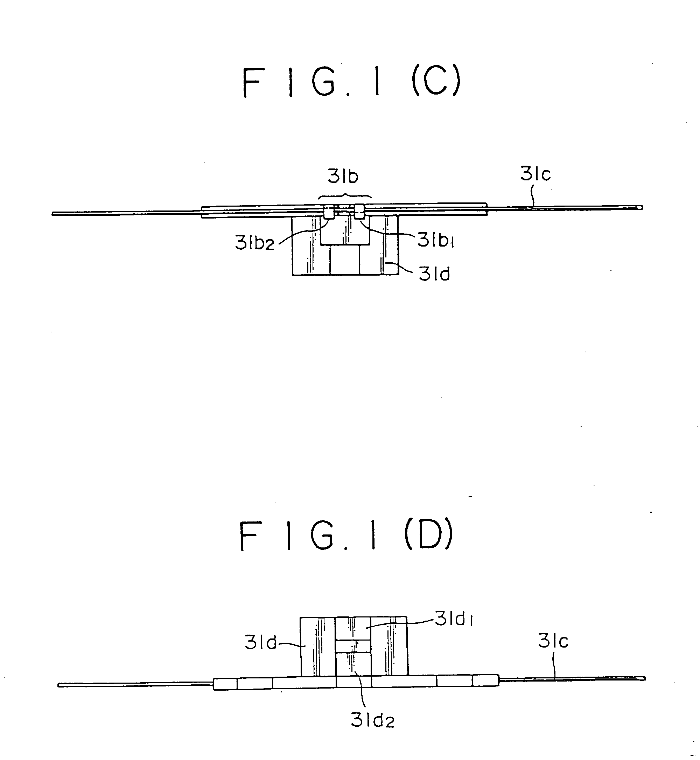

The invention is diagrammatically illustrated by way of example in the accompanying drawings, in which:-
Figures 1(A), 1(B), 1(C) and 1(D) are respectively a front view, a sectional view taken on line C-C of Figure 1(A), a plan view and a bottom view, of a locking member employed in a tape cassette according to the invention;
Figure 2 is a plan view of a tape cassette according to the invention in a locked state;
Figure 3 is a plan view of the tape cassette of Figure 2;
Figure 4 is a perspective view of a spool locking mechanism employed in a conventional tape cassette;
Figure 5 is a plan view of the locking mechanism employed in a conventional tape cassette;
Figures 6(A) and 6(B) are sectional views of assistance in explaining a conventional spool locking mechanism;
Figure 7 is a plan view of a conventional tape cassette, showing an area available for applying a label to the tape cassette;
Figure 8 is a sectional view of assistance in explaining the action of the locking mechanism in ejecting a conventional tape cassette from a recording/reproducing apparatus;
Figures 9(A) and 9(C) are views of assistance in explaining the tilt of a locking member employed in a conventional tape cassette;
Figure 10 is a plan view of assistance in explaining the slackening of the magnetic tape T in locking the spools of a conventional tape cassette;
Figure 11 is a plan view of assistance in explaining the slackening of the magnetic tape T due to an external force applied to a conventional tape cassette; and
Figures 12(A) and 12(B) are plan views of assistance in explaining the slackening of the magnetic tape T due to an impact applied to the rear of a conventional tape cassette.

A tape cassette 1A comprises a case body containing a magnetic tape T for recording, for example, PCM signals thereon, and constructed by fastening an upper case half and a lower case half together with screws, and a lid 6 pivotally joined to the case body so as to cover a front opening 5 formed at the front of the case body.

A pair of spools 7 and 8 are disposed within the case body of the tape cassette 1A, namely, within a space defined by the upper case half 2 and the lower case half 3, at positions corresponding to holes and 3a and 3bindows for receiving spool driving shafts, respectively, and the magnetic tape T is wound on the spools 7 and 8. A portion of the magnetic tape T is extended tautly between pinch rollers 9 and 10 serving also as guide rollers disposed on the opposite sides of the front opening 5 so as to be exposed through the front opening 5.

Erase disable mechanisms 12 and 13 to prevent accidental erase of signals recorded on the magnetic tape T are formed on the opposite ends of the rear of the case body of the tape cassette 1 across the upper case half 2 and the lower case half 3. Positioning holes 14 and 15 are formed at positions near the front and rear, respectively, of the middle portion of the case body in each of the upper and lower walls of the case body, and positioning holes 16 and 17 are formed at the opposite ends, respectively, of the rear portion near the rear of the case body in each of the upper and lower walls of the cassette. A plurality of detection holes 18 and 19 are formed in the case body along the rear side thereof. Gripping portions 20 and 21 are formed in the rear portions of the opposite side surfaces of the case body of the tape cassette 1.

The lid 6 for closing the front opening 5 of the case body is provided in its front surface with a longitudinal guide groove 22, and recesses 23 for a changer.

A window 3c of a transparent resin is formed in the middle portions of the upper wall of the upper case half and the lower wall of the lower case half 3A to enable determination of the amount of the magnetic tape T on the spools 7 and 8 from outside the case body of the tape cassette.

When the tape cassette 1 is loaded on a recording/reproducing apparatus, the magnetic tape T contained in the case body is subjected to a helical scanning operation of a rotary head for recording or reproducing operation.

A pair of tape guide member 24 and 25 inclined respectively in opposite directions are disposed in the space for receiving a portion of a head drum so as to be able to swing and to move laterally respectively on the inner sides of the pinch rollers 9 and 10 to ensure that the magnetic tape T slides helically along the head drum. Therefore, when the head drum 4 is inserted through the front opening 5 in the tape cassette 1, the tape guide members 24 and 25 are in contact with the circumference of the head drum to guide the magnetic tape T by holding the magnetic tape T on the circumference of the head drum.

Each spool 7, 8 comprises an inner spool 7a, 8a that engages the spool driving shaft, and an outer spool 7b, 8b engaged on the inner spool 7a, 8a for axial movement thereon and restrained from rotation relative to the inner spool 7a, 8a. The inner spool 7a, 8a has toothed portion 7a₁, 8a₁ projecting from the outer spool 7b, 8b toward the lower case half 3 and provided in its circumference with teeth.

The tape cassette 1 is provided with a locking member 31 that engages the toothed portion 7a₁ and 8a₁ of the spools 7 and 8 to lock the spools 7 and 8 while the tape cassette 1 is not in use. When the tape cassette 1 is loaded on the recording/reproducing apparatus, a positioning pin 99, which serves also as an unlocking pin, is received through the positioning hole 15 into the case body and shifts the locking member 31 in an unlocking direction to release the spools 7 and 8. The locking member 31 is placed in a recess 3e formed in the lower case half 3.

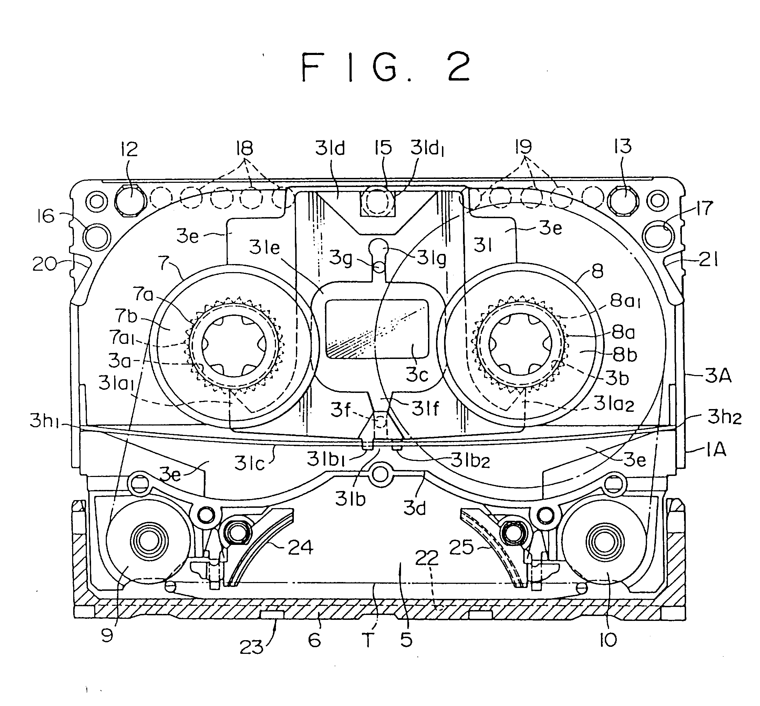

Locking fingers 31a₁ and 31a₂ of the locking member 31 engage the toothed portions 7a₁ and 8a₁ of the inner spools 7a and 8a of the spools 7 and 8 to lock the spools 7 and 8, a cam portion 31d has inclined surfaces 31d₁ and 31d₂ sloping in opposite directions to form a V-shaped surface with respect to the direction of thickness of the tape cassette 1A, and an opening 31e corresponds to the windows 2c and 3c formed in the upper case half 2 and the lower case half 3A of the locking member 31. The lower case half 3A is provided with the guide pins 3f and 3g projecting from the inner surface of the bottom wall thereof, and a locking member 31 is provided with guide slots 31f and 31g respectively for receiving the guide pins 3f and 3g. The locking member 31 has only one spring holding portion 31b formed at the middle of the upper side, as viewed in Figure 11(A), thereof. The spring holding portion 31b has L-shaped lugs 31b₁ and 31b₂ fixedly holding a locking spring 31c, such as a stainless steel wire. The locking spring 31c extends laterally in opposite directions from the spring holding portion 31b beyond the opposite lateral sides of the locking member 11. The opposite ends of the locking spring 31c rest respectively on steps 3h₁ and 3h₂ formed on the lower case half 3A as shown in Figure 2.

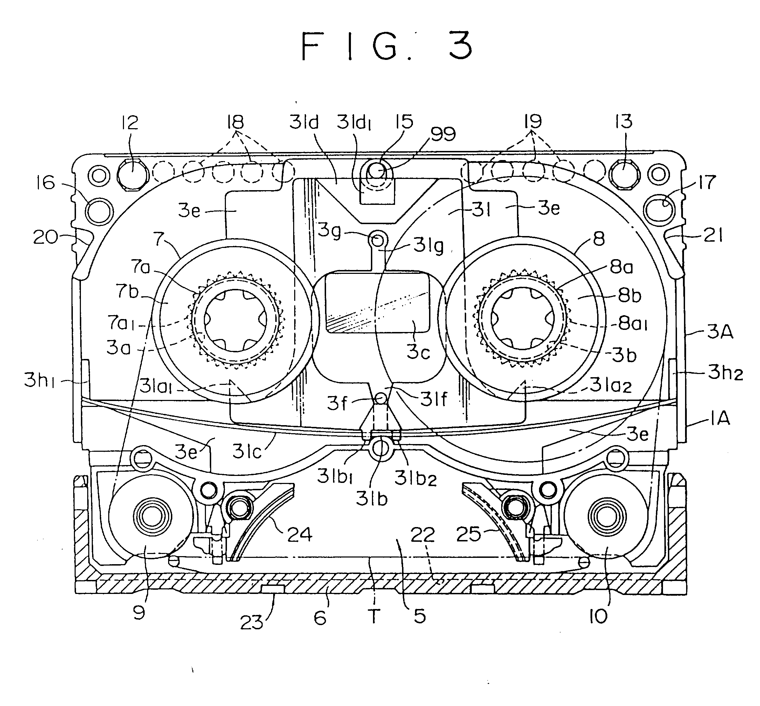

The locking spring 31c having the opposite ends resting on the steps 3h₁ and 3h₂ is strained so as to be convex toward the front of the tape cassette 1A to bias the locking member 31 toward the rear of the tape cassette 1A. Therefore, in the normal state, namely, while the tape cassette 1A is not in use, the locking fingers 31a₁ and 31a₂ are in engagement with the toothed portions 7a₁ and 8a₁ of the inner spools 7a and 8a as shown in Figure 2 to lock the spools 7 and 8. When a positioning pin 99 is received through a positioning hole 15 into the tape cassette 1A and engages one of the inclined surfaces 31d₁ and 31d₂, the locking member 31 is shifted to an unlocking position shown in Figure 3 to unlock the spools 7 and 8.

The employment of the locking spring 31c having the shape of a wire in the biasing means for biasing the locking member 31 toward the rear of the tape cassette 1A enables the biasing means to be formed in a relatively small (thin) construction, which contributes to forming the tape cassette 1A in a relatively small construction. The locking spring 31c having the shape of a relatively long, substantially straight wire is highly resistant to setting and durable to flexure.

In the locking state, the locking member 31 is positioned so that the locking spring 31c extends in a gentle curve, and the locking spring 31c is strained further in unlocking the spools. That is, the locking spring 31c is strained continuously so as to extend in a convex curve protruding toward the front of the tape cassette 1A. Since the locking spring 31c is strained always in a fixed direction, the locking spring 31c neither bends back nor spring in putting the locking spring 31c in the case body of the tape cassette 1A or in shifting the locking member 31. Furthermore, even if the locking spring 31c has a square cross-section instead of a circular cross-section or the same are flat springs, the locking springs 31c will not fall down. Accordingly, the locking member 31 can easily be put in the case body of the tape cassette 1A, and the locking member 31 is able to slide stably.

The opening 31e formed in the locking member 31 at a position corresponding to the windows 3c of the lower case half 3A causes the portions of the locking member 31 extending on the opposite sides of the opening 31e to be thin, which is somewhat disadvantageous to the rigidity of the locking member 31. Furthermore, the size, shape and position of the windows 3c of the upper case half 2 and the lower case half 3A are dependent on the size, shape and position of the opening 31e.

## Claims

1. A tape cassette comprising:
a case body having an opening (5) in a front side thereof at which a tape (T) is exposed to a read/write head, and comprising an upper case half and a lower case half (3A);
a pair of spools (7, 8) on which a tape (T) can be wound, supported for rotation within the case body, and provided respectively with toothed portions (7a, 8a);
a locking member (31) slidable on the inner surface of a bottom wall of the lower case half (3A) within the case body toward and away from the spools (7, 8) and provided with locking fingers (31a₁, 31a₂) to be brought into engagement respectively with the toothed portions (7a, 8a) of the spools (7, 8); and
a spring means (31c,) acting on the locking member (31) to bias the locking member toward the rear of the case body;
in which the locking member is provided with a cam portion (31d) having inclined surfaces (31d₁, 31d₂) sloping in opposite directions with respect to the thickness of the case body,
one or other of the inclined surfaces (31d₁, 31d₂) of the cam portion of the locking member is engaged by a positioning pin (99) of recording/reproducing apparatus when the tape cassette is loaded onto recording/reproducing apparatus,
the locking member is moved against the resilience of the spring means (31c) toward the front of the case body by the positioning pin (99) engaging one or other of the inclined surfaces of the cam portion upon loading the tape cassette on recording/reproducing apparatus, so that the locking fingers are disengaged from the toothed portions of the spools to unlock the spools, and
the locking member (31) is moved by the resilience of the spring means toward the rear of the case body as the positioning pin leaves the case body upon unloading of the tape cassette, so that the locking fingers are brought into engagement with the toothed portions of the spools to lock the spools;
wherein the spring means is a spring wire (31c) and is strained normally so as to bias the locking member (31) toward the rear of the case body, the spring wire (31c) is engaged with the locking member (31) only by a spring holding portion (31b) formed at the middle of the forward portion of the locking member (31) and end portions of the spring wire (31c) rest on respective steps (3h₁, 3h₂) formed on the lower case half (3A).

2. A tape cassette according to claim 1, wherein the locking member (31) is provided with a middle opening (31e) at a position corresponding to windows (3c) formed in the upper and lower case halves.

## Patentansprüche

1. Bandkassette mit
- einem Gehäusekörper, der auf seiner Vorderseite eine Öffnung (5) aufweist, an der ein Band (T) für einen Schreib-Lesekopf zugänglich ist, und eine obere Gehäusehälfte und eine untere Gehäusehälfte (3A) umfaßt,
- einem Paar Spulen (7, 8), auf dem sich ein Band (T) aufwickeln läßt, wobei die Spulen (7, 8) im Gehäusekörper drehbar angeordnet sind und gezahnte Abschnitte (7a bzw. 8a) aufweisen,
- einem Arretierelement (31), das sich im Gehäusekörper auf der Innenseite des Bodens der unteren Gehäusehälfte (3A) zu den Spulen (7, 8) hin- und von diesen wegschieben läßt und mit Arretierfingern (31a₁, 31a₂) versehen ist, die sich mit den gezahnten Abschnitten (7a bzw. 8a) der Spulen (7, 8) in Eingriff bringen lassen, und
- einem Federmittel (31c), das auf das Arretierelement (31) so einwirkt, daß es dieses in Richtung auf die Rückseite des Gehäusekörpers vorbelastet,
bei der
- das Arretierelement mit einem Nockenabschnitt (31d) versehen ist, der schräge Flächen (31d₁, 31d₂) aufweist, die in Dickenrichtung des Gehäusekörpers auseinanderlaufen,
- eine der beiden schrägen Flächen (31d₁, 31d₂) des Nockenabschnitts des Arretierelements an einen Positionierungsstift (99) eines Aufzeichnungs-/Wiedergabegeräts anstößt, wenn die Bandkassette in ein Aufzeichnungs-/Wiedergabegerät geladen wird,
- das Arretierelement durch den Positionierungsstift (99), an den beim Laden der Bandkassette in ein Aufzeichnungs-Wiedergabegerät eine der beiden schrägen Flächen (31d₁, 31d₂) des Nockenabschnitts anstößt, gegen die Spannung des Federmittels (31c) in Richtung auf die Vorderseite des Gehäusekörpers verschoben wird, so daß die Arretierfinger von den gezahnten Abschnitten der Spulen gelöst und die Spulen entarretiert werden,
- das Arretierelement (31) durch die Spannung des Federmittels in Richtung auf die Rückseite des Gehäusekörpers verschoben wird, wenn der Positionierungsstift beim Auswerfen der Bandkassette aus dem Gehäusekörper gelangt, so daß die Arretierfinger mit den gezahnten Abschnitten der Spulen in Eingriff gelangen und die Spulen arretieren,
wobei
- das Federmittel ein Federdraht (31c) ist und normalerweise so gespannt ist, daß es das Arretierelement (31) in Richtung auf die Rückseite des Gehäusekörpers vorbelastet, der Federdraht (31c) sich mit dem Arretierelement (31) nur mittels eines Federhalteabschnitts (31b), der in der Mitte des vorderen Teils des Arretierelements (31) gebildet ist, in Eingriff befindet und die Endabschnitte des Federdrahts (31c) auf Abstufungen (3h₁ bzw. 3h₂) sitzen, die an der unteren Gehäusehälfte (3A) gebildet sind.

2. Bandkassette nach Anspruch 1, bei der das Arretierelement (31) im Bereich von in der oberen und der unteren Gehäusehälfte gebildeten Fenstern (3c) mit einer Mittelöffnung (31e) versehen ist.

## Revendications

1. Cassette à bande comportant :
un corps de boîtier ayant une ouverture (5) dans un côté avant de celui-ci au niveau de laquelle une bande (T) est exposée à une tête de lecture/écriture, et comportant une moitié de boîtier supérieure et une moitié de boîtier inférieure (3A);
une paire de bobines (7, 8) sur laquelle peut être enroulée une bande (T), supportées pour rotation dans le corps de boîtier, et pourvues de manière respective de parties dentées (7a, 8a);
un élément de blocage (31) pouvant coulisser sur la surface interne d'une paroi inférieure de la moitié de boîtier inférieure (3A) dans le corps de boîtier vers et à l'écart des bobines (7, 8) et pourvu de doigts de blocage (31al, 31a2) devant être amenés en engagement respectif avec les parties dentées (7a, 8a) des bobines (7, 8); et
des moyens de ressort (31c) agissant sur l'élément de blocage (31) afin de rappeler l'élément de blocage vers l'arrière du corps de boîtier;
dans laquelle l'élément de blocage est pourvu d'une partie de came (31d) ayant des surfaces inclinées (31d1, 31d2) inclinées dans des directions opposées par rapport à l'épaisseur du corps de boîtier,
l'une ou l'autre des surfaces inclinées (31d1, 31d2) de la partie de came de l'élément de blocage est engagée par un doigt de positionnement (99) de l'appareil d'enregistrement/reproduction lorsque la cassette à bande est chargée dans l'appareil d'enregistrement/reproduction,
l'élément de blocage est déplacé à l'encontre de l'élasticité des moyens de ressort (31c) vers l'avant du corps de boîtier par le doigt de positionnement (99) qui engage l'une ou l'autre des surfaces inclinées de la partie de came lors du chargement de la cassette à bande dans l'appareil d'enregistrement/reproduction, de telle sorte que les doigts de blocage sont désengagés des parties dentées des bobines afin de débloquer les bobines, et
l'élément de blocage (31) est déplacé par l'élasticité des moyens de ressort vers l'arrière du corps de boîtier lorsque le doigt de positionnement quitte le corps de boîtier lors du déchargement de la cassette à bande, de sorte que les doigts de blocage sont amenés en engagement avec les parties dentées des bobines afin de bloquer les bobines;
les moyens de ressort étant un fil de ressort (31c) et étant sous contrainte normalement de façon à rappeler l'élément de blocage (31) vers l'arrière du corps de boîtier, le fil de ressort (31c) étant engagé avec l'élément de blocage (31) uniquement par une partie de maintien de ressort (31b) formée au milieu de la partie avant de l'élément de blocage (31) et des parties d'extrémité du fil de ressort (31c) reposant sur des épaulements respectifs (3h1, 3h2) formés sur la moitié de boîtier inférieure (3A).

2. Cassette à bande selon la revendication 1, dans laquelle l'élément de blocage (31) est pourvu d'une ouverture médiane (31e) dans une position correspondant à la fenêtre (3c) formée dans les moitiés de boîtier supérieure et inférieure.
